# EUROPEAN PATENT SPECIFICATION

(11) **EP 2 344 601 B1**
(45) Date of publication and mention of the grant of the patent: **30.10.2013**
(21) Application number: 09749306.8
(22) Date of filing: 09.11.2009
(51) Int. Cl.: C09J 109/02, C09J 115/02

(54) **THERMOSETTING POWDER ADHESIVE COMPOSITION**
HEISSHÄRTBARE KLEBSTOFFPULVERZUSAMMENSETZUNG
COMPOSITION ADHÉSIVE THERMODURCISSABLE EN POUDRE

(30) Priority: 07.11.2008 US 112223 P; 07.11.2008 US 112213 P
(43) Date of publication of application: 20.07.2011
(73) Proprietor: Lord Corporation, Cary, NC 27512-8012 (US)
(72) Inventor: HALLADAY, James, R., Erie PA 16505 (US); WEI, Kei-yi, Erie PA 16506 (US); ABBEY, Kirk, J., Garner NC 27529 (US)
(74) Representative: von Kreisler Selting Werner
(86) International application number: PCT/US2009/063712
(87) International publication number: WO 2010/054302

(56) References cited:
- JP-A- 1 095 177
- JP-A- 1 154 742
- US-A1- 2007 243 372

## Description

### FIELD OF THE INVENTION

The present invention relates to powder adhesive compositions particularly useful for bonding rubber to metaL More particularly, the present invention relates to powdered adhesives which form thermoset films upon heating to bond vulcanizable elastomers to metallic substrates.

### BACKGROUND OF THE INVENTION

Rubber-to-metal adhesion is necessary in order to make many of the rubber products we rely upon today including tires, mounts, bushings and some types of seals. Historically, this has been accomplished through making the rubber compounds self-bonding to brass plated steel or through the use of solvent or aqueous based primers with solvent or aqueous based adhesive covercoats.

Powder rubber to substrate adhesives have recently been developed as discussed in U.S. Patent Application No. 12/126,175, filed May 23, 2008, entitled "POWDER ADHESIVES FOR BONDING ELASTOMERS" published as US 2009-0130469. While these are environmentally preferred to solvent or aqueous adhesives, they suffer from some problems not encountered with the prior technologies. Specifically, powder adhesives are more prone to "sweep" when an elastomer is injected into a mold cavity containing a powder coated part. The incoming rubber sweeps the powder adhesive from the part, even if the powder adhesive has been sintered prior to molding.

Bonding of rubber vulcanizates to substrates, especially metal is conventionally obtained by two-coat primer-overcoat adhesive systems or one-coat primerless systems. Adhesive composition must exhibit excellent bonding, demonstrated as retention of rubber on the substrate after bond destruction. Further, when employed in a rubber molding operation, the adhesive must exhibit good sweep resistance. Sweep resistance is regarded as the ability of the uncured adhesive coating on the substrate to remain undisturbed against the force of injected green rubber into the mold cavity.

Sweep resistance is particularly difficult to achieve when a powder adhesive is employed. The sweep resistance of a powder adhesive is improved somewhat by heating the coated part to sinter the powder adhesive prior to the molding operation. However, a sintered powder adhesive still often lacks the level of sweep resistance required for many rubber molding/bonding operations. During the heated molding/bonding operation, the sintered adhesive could melt and is therefore prone to sweep as liquid rubber enters the mold.

It would therefore be desirable to provide a powder adhesive that possesses adequate sweep resistance for rubber molding/bonding operations.

JP-A-01154742 relates to a laminate structure, having a thermosetting coating on top of an adhesive. The thermosetting coating includes epoxy resins, acrylic resins, acrylic urethane resins, polyimide resins and unsaturated polyester resins. The adhesive layer is envisioned to be a means for adhering the thermosetting coating to an article. Examples of said adhesive comprise pressure-sensitive adhesives, hot-melt adhesives, post-hardening adhesives such as rubbers, acryls, urethane silicones, EVA copolymers, SIS-blockcopolymers, microcapsule hardening adhesives, and self-crosslinking acryl adhesives.

JP-A-01095177 relates to a powder adhesive comprising primarily a heat curing resin and a rubber component. The heat curing resins are preferably phenolic or epoxy resins and the rubber component comprises copolymers of butadiene.

US-A-2007243372 relates to a two coat adhesive system containing (i) an undercoat having a flexibilizer, a phenolic resin, and an acid and (ii) an overcoat containing an aqueous phenolic resin and an aqueous butadiene polymer latex.

WO2008/174955 describes a powder adhesive comprising a DCD/α-BrAN copolymer adhesive system applied over a phenolic resin containing MetalJacket^{®} metal treatment/primer system.

### SUMMARY OF THE INVENTION

The present invention relates to a powder adhesive composition comprising:
a) a sinterable primary rubber bonding polymer comprising a halogen-containing polyolefinic elastomer; and
b) a thermosetting compound comprising
   (1) a cure agent which will at least partially cure the primary rubber bonding polymer to form a thermoset film; or
   (2) a phenolic resin and a phenolic curative; or
   (3) a separate thermosetting composition comprising chlorosulfonated polyethylene and a crosslinker capable of crosslinking the chlorosulfonated polyethylene; and
a method for reducing sweep in a powder adhesive comprising:
(a) providing a sinterable primary rubber bonding polymer comprising a halogen-containing polyolefinic elastomer;
(b) providing a thermosetting compound comprising either
   (1) a cure agent which will at least partially cure the primary rubber bonding polymer to form a thermoset film; or
   (2) a phenolic resin and a phenolic curative; or
   (3) a separate thermosetting composition comprising chlorosulfonated polyethylene and a crosslinker capable of crosslinking the chlorosulfonated polyethylene;
(c) mixing the rubber bonding polymer and thermosetting compound together in powder form to provide a powder adhesive composition;
(d) applying the powder adhesive composition to a substrate to at least partially coat the substrate with powder adhesive; and
(e) heating the coated substrate to sinter and thermoset the powder adhesive composition.

Preferred embodiments are apparent from the dependent claims.

By adding a thermosetting component to a powdered adhesive, the adhesive may be applied to a substrate, sintered and thermoset to provide a sweep resistant adhesive film on the substrate, which may subsequently be bonded to an elastomer. Without a thermosetting component, the adhesive is at risk to re-melt or otherwise soften during a heated elastomer molding operation which in turn could cause the adhesive material to sweep off the substrate.

Thus, an adhesive for bonding metal to elastomers is provided which does not employ solvents and as such is delivered to a substrate substantially free of water or other liquids, while maintaining sweep resistance and forming environmentally durable bonds. Further, the powder adhesive compositions of the present invention comprise materials which are shelf stable and do not sinter nor alter their bonding properties during storage, yet can flow sufficiently to be sprayable and are sinterable at higher temperatures.

One advantage of powdered (dry) adhesives is the ability to mix materials that are incompatible in solvent or aqueous forms. Powder technology allows mixtures of otherwise incompatible materials to be partitioned from each other as separate powders and the different powders can be mixed together in dry blends. They remain compatible and/or non-reactive until the composition is heated at which time the components melt and merge together.

Using this technique, the embodiments of the present invention provide mixtures of powder adhesives containing a thermosetting component which remains unreactive until the powder adhesive is sintered, and the thermosetting component reacts to form a thermoset film and adhere the adhesive to a substrate so as to render the thermoset adhesive sweep resistant and stable.

### DETAILED DESCRIPTTON OF THE INVENTION

In one embodiment of the present invention, the powder adhesive comprises a sinterable primary rubber bonding polymer powder. To this powder adhesive composition a thermosetting compound is added comprising (1) a cure agent which will at least partially cure the primary rubber bonding polymer (2) a phenolic resin and a phenolic curative, or (3) a separate thermosetting composition which entraps the rubber bonding polymer in a thermoset film.

The sinterable primary rubber bonding polymer comprises a halogen-containing polyolefin. The halogens employed in the halogenated polyolefinic elastomers will usually be chlorine or bromine, although fluorine can also be used. Mixed halogens can also be employed in which case the halogen-containing polyolefinic elastomer will have more than one halogen substituted thereon. Halogen-containing polyolefinic elastomers and their preparation are well-known in the art and no need is seen to elucidate in any detail on these materials or their manufacture.

Representative halogenated polyolefins include chlorinated natural rubber, chlorine- and bromine-containing synthetic rubbers including polychloroprene, chlorinated polychloroprene, chlorinated polybutadiene, hexachloropentadiene, butadiene/halogenated cyclic conjugated diene adducts, chlorinated butadiene styrene copolymers, chlorinated ethylene propylene copolymers and ethylene/propylene/non-conjugated diene terpolymers, chlorinated polyethylene, chlorosulfonated polyethylene, poly(2,3-dichloro-1,3-butadiene), brominated poly(2,3-dichloro-1,3-butadiene), copolymers of α-haloacrylonitriles and 2,3-dichloro-1,3-butadiene, chlorinated poly(vinyl chloride) and the like including mixtures of such halogen-containing elastomers.

The butadiene monomers useful for preparing the butadiene polymer can essentially be any monomer containing conjugated unsaturation. Typical monomers include 2,3-dichloro-1,3-butadiene; 1,3-butadiene; 2,3-dibromo-1,3-butadiene isoprene; isoprene; 2,3-dimethylbutadiene; chloroprene; bromoprene; 2,3-dibromo-1,3-butadiene; 1,1,2-trichlorobutadiene; cyanoprene; hexachlorobutadiene; and combinations thereof. It is particularly preferred to use 2,3-dichloro-1,3-butadiene since a polymer that contains as its major portion 2,3-dichloro-1,3-butadiene monomer units has been found to be particularly useful in adhesive applications due to the excellent bonding ability and barrier properties of the 2,3-dichloro-1,3-butadiene-based polymers. As described above, an especially preferred embodiment of the present invention is one wherein the butadiene polymer includes at least 60 weight percent, preferably at least 70 weight percent, 2,3-dichloro-1,3-butadiene monomer units.

The butadiene monomer can be copolymerized with other monomers. Such copolymerizable monomers include α-haloacrylonitriles such as α-bromoacrylonitrile and α-chloroacrylonitrile; α,β-unsaturated carboxylic acids such as acrylic, methacrylic, 2-ethylacrylic, 2-propylacrylic, 2-butylacrylic and itaconic acids; alkyl-2-haloacrylates such as ethyl-2-chloroacrylate and ethyl-2-bromoacrylate; α-bromovinylketone; vinylidene chloride; vinyl toluenes; vinylnaphthalenes; vinyl ethers, esters and ketones such as methyl vinyl ether, vinyl acetate and methyl vinyl ketone; esters amides, and nitriles of acrylic and methacrylic acids such as ethyl acrylate, methyl methacrylate, glycidyl acrylate, methacrylamide and acrylonitrile; and combinations of such monomers. The copolymerizable monomers, if utilized, are preferably α-haloacrylonitrile and/or α, β-unsaturated carboxylic acids. The copolymerizable monomers may be utilized in an amount of 0.1 to 30 weight percent, based on the weight of the total monomers utilized to form the butadiene polymer.

In a preferred embodiment of the present invention, the rubber bonding polymer comprises a copolymer of dichlorobutadiene and brominated acrylonitrile (DCD/α-BrAN). Copolymer of DCD/α-BrAN are known to be effective for bonding rubber to metal in the range of 95:5 to 85:15. However, used alone DCD/α-BrAN is prone to sweep because no reaction occurs during the sintering process to make it thermosetting. The addition of another thermosetting component such as a powdered phenolic composition or a material (either melting or non-melting) containing a curing or crosslinking agent can be dry blended with the powdered DCD/α-BrAN to render it thermosetting during the sintering process and keep it from sweeping off of the metal.

In one embodiment of the present invention, the thermosetting component comprises a curing agent added to the rubber bonding polymer to at least partially cure and thermoset the rubber bonding polymer. In a preferred embodiment of the present invention, wherein rubber bonding polymer comprises a DCD/α-BrAN copolymer and the curing agent comprises at least one of an organic peroxide, a thiourea, or a sulfur cure system such as tetramethylthiuram disulfide. The curing agent at least partially cures and thermosets the DCD/α-BrAN during the powder sintering process to improve sweep resistance of the adhesive.

In a most preferred embodiment of the present invention, the curing agent comprises at least one of the following: organic peroxides (generally di-tertiary alkyl peroxides) including but not limited to 2,5-dimethyl-2,5-di(t-butylperoxy) hexane, 2,5-dimethyl-2,5-di(t-butylperoxy) hexyne-3, dicumyl peroxide, t-butyl cumyl peroxide and α,α'-di(2-t-butylperoxyisopropyl) benzene; thioureas including but not limited to 1,3-dibutylthiourea, trimethylthiourea, 1,3-diethylthiourea, and ethylenethiourea; and, sulfur donors including but not limited to tetramethylthiuram disulfide, tetraethylthiuram disulfide, dipentamethylenethiuram tetrasulfide or hexasulfide, or elemental sulfur combined with traditional sulfur accelerators known to the rubber industry.

In another embodiment of the present invention, the primary rubber bonding polymer is not provided with a cure agent, but rather a separate thermosetting composition is added to the primary rubber bonding polymer to provide a thermosetting film upon cure which entraps and stabilizes the primary rubber bonding polymer in a thermoset film. The thermosetting composition is preferably compatible with the primary adhesive constituents so as to provide good mixing and adhesive film formation. Further, the thermosetting composition is preferably absent internal or pendant unsaturation so as to prevent curing while the components are mixed in powdered form. In a preferred embodiment of the present invention, the cure is not initiated until the mixture is heated during a sintering step.

In a further embodiment of the present invention, a rubber bonding polymer such as a halogenated polybutadiene is employed as the primary rubber bonding polymer, and a second thermosetting composition comprising chlorosulfonated polyethylene and a curative such as poly-dinitrosobenzene (DNB) are provided to affect a thermoset film upon heating. The chlorosulfonated polyethylene and DNB will react to form a thermoset film which entraps and stabilized the primary rubber bonding polymer. Additionally, since chlorosulfonated polyethylene and DNB are preferred rubber adhesive components, they are particularly well suited for use in the present invention. The addition of a minor percentage of chlorosulfonated polyethylene into a polybutadiene based formulation along with DNB makes the composition thermosetting. In addition to chlorosulfonated polyethylene, other thermosetting polymer compounds suitable for use in the present invention include polychloroprene and chlorinated polyethylene.

In another aspect of the invention, it has also been discovered that addition of particular reinforcing fillers to the rubber bonding polymer improves its sweep resistance. A reinforcing filler increases the viscosity, which improves sweep resistance and it also reinforces the polymer, thus improving the strength, especially at high temperatures.

In a preferred embodiment of the present invention, the reinforcing filler comprises a nano-scale particulate reinforcing filler such as carbon black, precipitated or fumed silicas, fumed metal oxides such as zinc oxide, or silicates such as calcium silicate. These materials increase the strength of vulcanized rubber compounds and are shown here to be useful in increasing the hot tear strength of the adhesive composition. In an embodiment of the present invention, the filler is present in an amount from 1 to 30 weight percent. Other suitable fillers comprise particulate fillers that have a primarily particle size of less than about 200 nanometers.

### EXAMPLES

Covercoat A is adhesive topcoat composition containing poly-dinitrosobenzene (DNB) and other fillers in post-brominated polydichlorobutadiene. When dried and ground Covercoat A is non-sintering and therefore does not withstand sweep when employed in a mold as a powdered adhesive composition.

Primer A is a thermosetting blend of acrylonitrile butadiene rubber with phenolic resins and curatives for the phenolic resins. The curatives are methylene donors, in this case, a blend of hexamethylenetetramine (HMT) and hexamethoxymethylmelamine (HMMM).

The topcoat compositions in Examples 1 to 3 were bonded to zinc phosphatized steel (ZPS) coupons. Powder Primer A was applied and sintered 5 minutes at 320 °F. The topcoat was sintered 7 minutes at 320 °F. A sulfur-cured carbon-black reinforced natural rubber compound (HC130) was bonded in an injection mold at 300 °F.

### Examples 1 to 3 of dry-blended powders

| | Control | Dry blend | Dry blend |
|---|---|---|---|
| Example (dry blends) | 1 | 2 | 3 |
| DCD/α-BrAN | 100.0 | 75.0 | 80.0 |
| Primer A | ------ | 25.0 | ------ |
| Covercoat A | ------ | ------ | 20.0 |
| | | | |
| Primer Thickness | 2.6 | 1.9 | 1.9 |
| Total Film Thickness (mils) | 3.0 | 2.8 | 3.1 |
| | | | |
| Sweep | Significant | None | None |
| Hot Tear | Fair | Fair | Good |
| Primary Bond (pounds) | 49 | 52 | 59 |
| Boiling Water resistance | < 9 min. | >4 hrs | >24 hrs |

### Examples 4 to 6 of dry-blended powders

In another example, a chlorinated polypropylene (CPP) topcoat containing 10% DNB was blended with a dichlorobutadiene-alpha-bromoacrylonitrile-hydroxyethylacrylate (DCD/α-BrAN-HEA) terpolymer (90:8:2) to make a topcoat with better performance than either material separately.

Examples 4 to 6 were bonded to zinc phosphatized steel (ZPS) coupons. Powder Primer A was applied and sintered 5 minutes at 320 °F. The topcoat was sintered 7 minutes at 320 °F. A sulfur-cured carbon-black reinforced natural rubber compound (HC130) was bonded in an injection mold at 300 °F.

| Example (dry blends) | Control 4 | Control 5 | Dry blend 6 |
|---|---|---|---|
| DCD/α-BrAN-HEA | 100.0 | ----- | 50.0 |
| CPP composition | ----- | 100.0 | 50.0 |
| | | | |
| Film formation | Excellent | Poor | Good |
| Sweep | Significant | None | None |
| Hot Tear | Fair | Good | Good |
| Primary Bond (pounds) | 66 | 58 | 63 |
| Boiling Water resistance | >4 hrs | <2 min. | >16 hrs |

### Examples 7 to 11 of dry-blended powders

The different powders can be blended across a fairly broad range as demonstrated by the topcoats in Examples 7-11. At higher levels of phenolic primer, the blend can be used as a single coat system rather than the traditional two coat primer/adhesive systems.

| Example (dry blends) | 7 | 8 | 9 | 10 | 11 |
|---|---|---|---|---|---|
| DCD/α-BrAN | 75.0 | 65.0 | 55.0 | 45.0 | 35.0 |
| Primer A | 25.0 | 35.0 | 45.0 | 55.0 | 65.0 |

The following data was generated with zinc phosphatized steel (ZPS) coupons. Powder Primer A was applied and sintered 5 minutes at 320 °F. The topcoat was sintered 7 minutes at 320 °F. A sulfur-cured carbon-black reinforced natural rubber compound (HC130) was bonded in an injection mold at 300 °F.

| Example (dry blends) | 7 | 8 | 9 | 10 | 11 |
|---|---|---|---|---|---|
| Total Film Thickness (mils) | 2.4 | 2.9 | 2.7 | 3.3 | 3.6 |
| Primary Bond (pounds) | 52 | 52 | 49 | 44 | 30 |

The following was bonded to zinc phosphatized steel (ZPS) coupons without the use of a primer. The topcoat was sintered 7 minutes at 320 °F. A sulfur-cured carbon-black reinforced natural rubber compound (HC130) was bonded in an injection mold at 300 °F.

| Example (dry blends) | 7 | 8 | 9 | 10 | 11 |
|---|---|---|---|---|---|
| Total Film Thickness (mils) | 1.2 | 1.3 | 1.8 | 2.3 | 2.2 |
| Primary Bond (pounds) | 31 | 40 | 49 | 46 | 27 |

In Examples 13-17 the addition of both a curative for the rubber bonding polymer and a carbon black filler (example 17) provide superior performance over compositions containing only filler (13) or only a curative (14-16).

| | 12 | 13 | 14 | 15 | 16 | 17 |
|---|---|---|---|---|---|---|
| | | | | | | |
| DCD/α-BrAN | 100.0 | 85.0 | 95.0 | 97.0 | 95.0 | 80.0 |
| N234 carbon black | ------ | 15.0 | ------ | ------ | ------ | 15.0 |
| DBPH* | ------ | ------ | 5.0 | ------ | ------ | 5.0 |
| DBTU* | ------ | ------ | ------ | 3.0 | ------ | ------ |
| TMTD* | ------ | ------ | ------ | ------ | 5.0 | ------ |

MDR 2000 rheometer tested 15 minutes at 320 °F.

| | | | | | | |
|---|---|---|---|---|---|---|
| Low torque (lb-in) | 0.06 | 0.39 | 0.08 | 0.11 | 0.03 | 0.28 |
| High torque (lb-in) | 0.26 | 0.70 | 8.04 | 3.90 | 3.89 | 23.94 |
| | | | | | | |
| Primary bond strength (lbs) | 71 | 70 | 61 | 65 | 60 | 77 |
| Boiling water resistance | >4 hrs | >4 hrs | >4 hrs | >4 hrs | >4 hrs | >24 hrs |
| Hot Tear resistance | poor | fair | fair | fair | fair | excellent |
| % rubber tear | 0 | 5 | 5 | 5 | 5 | 80 |
| Sweep resistance | poor | fair | good | good | good | no sweep |

| | | | | | | |
|---|---|---|---|---|---|---|
| *DBPH: 50% active 2,5-dimethyl-2,5-di(t-butylperoxy) hexane *DBTU: 1,3-dibutylthiourea *TMTD: tetramethylthiuram disulfide | | | | | | |

Similarly, in Examples 18-22 secondary thermosetting components (DNB and CSPE), are provided in place of a curative for the primary rubber bonding polymer (DCD/α-BrAN).

| | 18 | 19 | 20 | 21 | 22 |
|---|---|---|---|---|---|
| DCD/α-BrAN | 100.0 | 90.0 | 85.0 | 60.0 | 65.0 |
| DNB | ------ | 10.0 | ------ | 10.0 | 10.0 |
| Carbon Black | ------ | ------ | 15.0 | 15.0 | ----- |
| Chlorosulfonated polyethylene | ------ | ------ | ------ | 15.0 | 15.0 |
| SiO₂ (powder) | ------ | ------ | ------ | ------ | 10.0 |

MDR 2000 rheometer tested 15 minutes at 320 °F.

| | | | | | |
|---|---|---|---|---|---|
| Low torque (lb-in) | 0.06 | 0.03 | 0.39 | 0.76 | 0.28 |
| High torque (lb-in) | 0.26 | 0.62 | 0.70 | 16.73 | 7.16 |

| | | | | | |
|---|---|---|---|---|---|
| Hot Tear resistance | poor | poor | fair | Excellent | Excellent |
| % rubber tear | 0 | 0 | 5 | rubber break | rubber break |
| Sweep resistance | poor | poor | fair | no sweep | no sweep |

## Claims

1. A powder adhesive composition comprising:
a) a sinterable primary rubber bonding polymer comprising a halogen-containing polyolefinic elastomer; and
b) a thermosetting compound comprising
(1) a cure agent which will at least partially cure the primary rubber bonding polymer to form a thermoset film; or
(2) a phenolic resin and a phenolic curative; or
(3) a separate thermosetting composition comprising chlorosulfonated polyethylene and a crosslinker capable of crosslinking the chlorosulfonated polyethylene.

2. The adhesive composition of claim 1, wherein the halogen-containing polyolefinic elastomer comprises a sinterable dichlorobutadiene alpha-bromoacrylonitrile copolymer powder.

3. The adhesive composition of claim 2, wherein the cure agent comprises at least one of an organic peroxide, a thiourea, or a sulfur curative.

4. The adhesive composition of claim 1, wherein the composition comprises from 0.5% to 15% of the cure agent which is capable of crosslinking the halogen-containing polyolefinic elastomer.

5. The adhesive composition of claim 1, wherein the powder adhesive composition comprises a sinterable halogen-containing polyolefinic elastomer and chlorosulfonated polyethylene and a crosslinker capable of crosslinking the chlorosulfonated polyethylene.

6. The adhesive composition of claim 5, wherein the crosslinker comprises poly-dinitrosobenzene.

7. The adhesive composition of claim 5 comprising 1 to 25 weight percent chlorosulfonated polyethylene.

8. The adhesive composition of claim 6 comprising 1 to 25 weight percent poly-dinitrosobenzene.

9. The adhesive composition of claim 1, further comprising from 1 to 30 weight percent of a filler.

10. The adhesive composition of claim 9, wherein the filler comprises carbon black.

11. A method for reducing sweep in a powder adhesive comprising:
(a) providing a sinterable primary rubber bonding polymer comprising a halogen-containing polyolefinic elastomer;
(b) providing a thermosetting compound comprising either
(1) a cure agent which will at least partially cure the primary rubber bonding polymer to form a thermoset film; or
(2) a phenolic resin and a phenolic curative; or
(3) a separate thermosetting composition comprising chlorosulfonated polyethylene and a crosslinker capable of crosslinking the chlorosulfonated polyethylene;
(c) mixing the rubber bonding polymer and thermosetting compound together in powder form to provide a powder adhesive composition;
(d) applying the powder adhesive composition to a substrate to at least partially coat the substrate with powder adhesive; and
(e) heating the coated substrate to sinter and thermoset the powder adhesive composition.

12. The method of claim 11, wherein the primary rubber bonding polymer comprises a sinterable dichlorobutadiene alpha-bromoacrylonitrile copolymer powder.

13. The method of claim 11, wherein the cure agent comprises at least one of an organic peroxide, a thiourea, or a sulfur curative.

## Patentansprüche

1. Pulverkleberzusammensetzung, umfassend:
a) ein sinterfähiges primäres Kautschukklebepolymer, das ein halo-genhaltiges polyolefinisches Elastomer umfasst; und
b) eine wärmehärtbare Masse, umfassend:
(1) ein Härtungsmittel, das das primäre Kautschukklebepolymer wenigstens partiell unter Bildung eines wärmegehärteten Films härtet; oder
(2) ein Phenolharz und ein Phenol-Härtungsmittel; oder
(3) eine separate wärmehärtbare Zusammensetzung, die chlorsulfoniertes Polyethylen und einen Vernetzer, der das chlorsulfonierte Polyethylen vernetzen kann, umfasst.

2. Kleberzusammensetzung gemäß Anspruch 1, wobei das halogenhaltige polyolefinische Elastomer ein sinterfähiges Dichlorbutadien-α-Bromacryl-nitril-Copolymer-Pulver umfasst.

3. Kleberzusammensetzung gemäß Anspruch 2, wobei das Härtungsmittel ein organisches Peroxid, einen Thioharnstoff und/oder ein schwefelhaltiges Vulkanisationsmittel umfasst.

4. Kleberzusammensetzung gemäß Anspruch 1, wobei die Zusammensetzung 0,5% bis 15% des Vernetzers, der das halogenhaltige polyolefinische Elastomer vernetzen kann, umfasst.

5. Kleberzusammensetzung gemäß Anspruch 1, wobei die Pulverkleberzusammensetzung ein sinterfähiges halogenhaltiges polyolefinisches Elastomer und chlorsulfoniertes Polyethylen und einen Vernetzer, der das chlorsulfonierte Polyethylen vernetzen kann, umfasst.

6. Kleberzusammensetzung gemäß Anspruch 5, wobei der Vernetzer Polydinitrosobenzol umfasst.

7. Kleberzusammensetzung gemäß Anspruch 5, die 1 bis 25 Gewichtsprozent chlorsulfoniertes Polyethylen umfasst.

8. Kleberzusammensetzung gemäß Anspruch 6, die 1 bis 25 Gewichtsprozent Polydinitrosobenzol umfasst.

9. Kleberzusammensetzung gemäß Anspruch 1, die weiterhin 1 bis 30 Gewichtsprozent eines Füllstoffs umfasst.

10. Kleberzusammensetzung gemäß Anspruch 9, wobei der Füllstoff Ruß umfasst.

11. Verfahren zum Reduzieren der Fegewirkung bei einem Pulverkleber, umfassend:
(a) Bereitstellen eines sinterfähigen primären Kautschukklebepolymers, das ein halogenhaltiges polyolefinisches Elastomer umfasst;
(b) Bereitstellen einer wärmehärtbaren Masse, entweder:
(1) eines Härtungsmittels, das das primäre Kautschukklebepolymer wenigstens partiell unter Bildung eines wärmegehärteten Films härtet; oder
(2) eines Phenolharzes und eines Phenol-Härtungsmittels; oder
(3) einer separaten wärmehärtbaren Zusammensetzung, die chlorsulfoniertes Polyethylen und einen Vernetzer, der das chlorsulfonierte Polyethylen vernetzen kann, umfasst;
(c) Mischen des Kautschukklebepolymers mit der wärmehärtbaren Masse in Pulverform, was eine Pulverkleberzusammensetzung ergibt;
(d) Auftragen der Pulverkleberzusammensetzung auf ein Substrat, so dass das Substrat wenigstens teilweise mit Pulverkleber beschichtet wird; und
(e) Erhitzen des beschichteten Substrats, so dass die Pulverkleberzusammensetzung gesintert und thermisch gehärtet wird.

12. Verfahren gemäß Anspruch 11, wobei das primäre Kautschukklebepolymer ein sinterfähiges Dichlorbutadien-α-Bromacrylnitril-Copolymer-Pulver umfasst.

13. Verfahren gemäß Anspruch 11, wobei das Härtungsmittel ein organisches Peroxid, einen Thioharnstoff und/oder ein schwefelhaltiges Vulkanisationsmittel umfasst.

## Revendications

1. Composition adhésive en poudre comprenant :
a) un polymère de liaison de caoutchouc primaire pouvant être fritté comportant un élastomère polyoléfinique contenant un halogène; et
b) un composé thermodurcissable comprenant
1) un agent de durcissement qui fera durcir, au moins partiellement, le polymère de liaison de caoutchouc primaire pour former un film thermodurci; ou
2) une résine phénolique et un agent de durcissement phénolique ; ou
3) une composition thermodurcissable séparée comportant du polyéthylène chlorosulfonaté et un agent de réticulation capable de réticuler le polyéthylène chlorosulfonaté.

2. Composition adhésive selon la revendication 1, dans laquelle l'élastomère polyoléfinique contenant un halogène comprend une poudre pouvant être frittée de copolymère de dichlorobutadiène et alpha-bromoacrylonitrile.

3. Composition adhésive selon la revendication 2, dans laquelle l'agent de durcissement comporte au moins l'un d'un peroxyde organique, d'une thio-urée ou d'un agent de durcissement à base de soufre.

4. Composition adhésive selon la revendication 1, dans laquelle la composition comporte de 0,5% à 15% de l'agent de durcissement, lequel est capable de réticuler l'élastomère polyoléfinique contenant un halogène.

5. Composition adhésive selon la revendication 1, dans laquelle la composition adhésive en poudre comporte un élastomère polyoléfinique contenant un halogène pouvant être fritté et du polyéthylène chlorosulfonaté et un agent de réticulation capable de réticuler le polyéthylène chlorosulfonaté.

6. Composition adhésive selon la revendication 5, dans laquelle l'agent de réticulation comporte du polydinitrosobenzène.

7. Composition adhésive selon la revendication 5, comportant de 1 à 25 pour cent en poids de polyéthylène chlorosulfonaté.

8. Composition adhésive selon la revendication 6, comportant de 1 à 25 pour cent en poids de polydinitrosobenzène.

9. Composition adhésive selon la revendication 1, comportant, de plus, de 1 à 30 pour cent en poids d'une charge de remplissage.

10. Composition adhésive selon la revendication 9, dans laquelle la charge comporte du noir de carbone.

11. Procédé pour réduire l'élimination par balayage dans un adhésif en poudre consistant à :
a) fournir un polymère de liaison de caoutchouc primaire pouvant être fritté comportant un élastomère polyoléfinique contenant un halogène ;
b) fournir un composé thermodurcissable comprenant, soit
1) un agent de durcissement qui fera durcir, au moins partiellement, le polymère de liaison de caoutchouc primaire pour former un film thermodurci; soit
2) une résine phénolique et un agent de durcissement phénolique ; soit
3) une composition thermodurcissable séparée comportant du polyéthylène chlorosulfonaté et un agent de réticulation capable de réticuler le polyéthylène chlorosulfonaté ;
c) mélanger ensemble le polymère de liaison de caoutchouc et le composé thermodurcissable sous forme de poudre pour fournir une composition adhésive en poudre ;
d) appliquer la composition adhésive en poudre sur un substrat pour recouvrir, au moins partiellement, le substrat avec la poudre adhésive ; et
e) chauffer le substrat recouvert pour fritter et thermodurcir la composition adhésive en poudre.

12. Procédé selon la revendication 11, dans lequel le polymère de liaison de caoutchouc primaire comprend une poudre frittable de copolymère d'alpha-bromoacrylonitrile et dichlorobutadiène.

13. Procédé selon la revendication 11, dans lequel l'agent de durcissement comporte au moins l'un d'un peroxyde organique, d'une thio-urée ou d'un agent de durcissement à base de soufre.
